# EUROPEAN PATENT APPLICATION

(11) **EP 1 950 431 A2**
(43) Date of publication of application: **30.07.2008**
(21) Application number: 07270045.3
(22) Date of filing: 28.08.2007
(51) Int. Cl.: F16B 12/26, A47B 83/02

(54) **Rotatable snap-fit joint and structures or articles incorporating the same**

(30) Priority: 24.01.2007 GB 0701329
(71) Applicant: Martin Yaffe International Limited, Rochdale, Lancashire OL11 2QN (GB)
(72) Inventor: Humby, Leigh, Blackpool, Lancashire GY3 9AW (GB)
(74) Representative: Wilson Gunn

(57) **Abstract**

A snap fit head 10 comprises a pair of jaws 11 with a central void 12 therebetween and is inserted into an aperture 20. The exterior surfaces 13 of the jaws 11 are segments of a truncated cone and are also provided with a circumferential groove 14. which is engaged by the rim of the aperture 20. This enables the snap-fit head 10 to be retained in position relative to the aperture 20, whilst being rotatable with respect to the aperture 20. Both the head 10 and the aperture 20 are formed from hollow moulded plastic. This reduces the weight of the parts and also advantageously increases the flexibility of the jaws 11, facilitating the insertion and removal of the head 10 from the aperture 20. Typically, the head 10 would project from one component of a structure or apparatus and the aperture 20 would be provided in a second component. The head 10 and aperture 20 would then allow the two components to be releasably fastened together whilst still allowing rotation of the first component relative to the second component. Suitable structures incorporating such heads 10 may include structures such as signs, doors, windows, shelves or items of furniture such as a chair, table, picnic bench 104 or play apparatus 200.

## Description

The present invention relates to a rotatable snap-fit joint and to structures or articles, in particular furniture, incorporating the same.

It is often desirable to supply furniture in 'flat-packs' for self assembly. Usually, these flat packs will require a user to assemble the furniture from the flat packed components with the use of simple tools such as screwdrivers and the use of simple fastening means including screws and adhesives. Occasionally, parts may be provided which slot together.

In some such flat packs, parts are provided which are moveable relative to each other. This is generally facilitated by means of a suitable hinge, wheel or set of runners. These typically require attachment to at least one of the parts by use of fastenings such as screws.

The requirement for fastenings such as screws means that in order to put such furniture together a user must be equipped with an appropriate set of tools. Additionally, a supplier must ensure that not only are fastenings provided, the correct number of the correct type of fastenings are provided for each flat-pack. This can impose an additional cost to the manufacture process and if inadequately performed, lead to irate customers.

It is therefore an object of the present invention to provide a fastening or joint that alleviates or overcomes the above problems.

According to a first aspect of the present invention there is provided a rotatable snap-fit head adapted to snap-fit with a substantially circular aperture, said head having a generally conical or frusto-conical exterior profile incorporating a circumferential groove for engaging with the rim of the aperture, said head comprising two or more inwardly flexible jaws with a void therebetween, allowing the head to be inserted through the aperture sufficiently far that the aperture may then engage with the circumferential groove and wherein the head is hollow.

By use of the above snap-fit head provided on a fist component and a suitable aperture provided on a second component, the two components may be easily joined. Furthermore, the first component may be rotated in relation to the second component about the axis of the head. By using a hollow head, the weight of the head and the amount of material required to produce the head are reduced. Accordingly, the cost of material for manufacture can be reduced as well as reducing the weight of the head and increasing the flexibility of the jaws.

The head may be comprised of any suitable number of jaws but preferably comprises two jaws. The exterior surface of the jaws preferably provides the generally conical or frusto-conical exterior profile of the head.

The head may be formed integrally as part of a component of a structure or complex article. Alternatively, the head may be fixed to a component by any suitable means. Similarly an aperture may be provided in a component for connecting with said head. Alternatively, the aperture may be provided in a separate component that may be affixed to another component by any suitable means.

The aperture may comprise an inner rim adapted to provide the engagement with the circumferential groove. The inner rim may be provided with a sloped inner profile to facilitate insertion of the head into the aperture.

The head and/or the aperture may be formed from any suitable material. In one preferred embodiment, this may be moulded plastic. Preferably, the aperture as well as the head is hollow. The head and/or the aperture may be formed by a suitable blow moulding technique. Such blow moulding techniques could include injection blow moulding, stretch blow moulding and blow moulding using performs. Alternatively, such parts may be formed by a rotational moulding technique. The rotational moulding technique may be a technique of the type wherein a quantity of plastic material is provided within a mould tool that is heated then cooled whilst rotating.

According to a second aspect of the present invention there is provided a structure comprising a first component provided with a head according to the first aspect of the present invention; and a second component provided with an aperture for engaging with a head according to the present invention wherein the first and second components are connected together by inserting the head into the aperture.

The structure of the second aspect of the present invention may incorporate any or all of the features described in relation to the first aspect of the invention as desired or as appropriate.

The structure may be any suitable structure. In particular, the structure may comprise an item of furniture such as a chair, table or similar or a child's play apparatus such as a climbing frame, slide or similar. Alternatively, the structure may comprise a sign, door, window, shelf or similar.

The snap fit head may be used to connect components where relative rotation is not desirable. In such cases, the first and second components may be provided with additional co-operating features operable to inhibit such rotation.

According to a third aspect of the present invention there is provided a structure comprising a first component provided with a pair of heads according to the first aspect of the present invention, said pair of heads being aligned along a common axis; and a pair of apertures for engaging with a head according to the present invention provided upon one or more mounting components wherein the first component is connected between the apertures of the mounting component or components by inserting each head into one of the apertures such that the first component may rotate about the common axis of the heads relative to the mounting components.

The structure of the third aspect of the present invention may incorporate any or all of the features described in relation to the first or second aspects of the invention as desired or as appropriate.

The structure may be any suitable structure. In particular, the structure may comprise an item of furniture such as a chair, table or similar or a child's play apparatus such as a climbing frame, slide or similar. Alternatively, the structure may comprise a sign, door, window, shelf or similar.

In particular, a structure according to the above aspect of the present invention may comprise a substantially panel like first component and one or more mounting components forming a frame, such that the panel like component is rotatable relative to the frame. In this manner, the structure can provide any of the following: a sign or similar; a door, window or similar; or a seat, shelf, support surface or similar.

According to a fourth aspect of the present invention there is provided a picnic bench comprising: a pair of end panels; a table panel; and a pair of seat panels wherein the table panel and seat panels are mounted to and between the pair of end panels characterised in that the seat panels are mounted to the end panels by means of a snap-fit head according to the first aspect of the present invention inserted into apertures provided in the end panels, such that the seat panels may be rotated relative to the end panels.

The picnic bench of the third aspect of the present invention may incorporate any or all of the features described in relation to the first to third aspects of the invention as desired or as appropriate.

Preferably, the end panels are adapted to stand substantially vertically. Preferably, the seat panels are adapted to be rotatable about a substantially horizontal axis. The seat panels may be rotatable from a first closed position wherein they rest on the table panel to a second open position where they project substantially horizontally from the bench.

The seat panels may each be provided with a projecting handle. The handle may be positioned to project downwardly of the seat panel when in the open position and upwardly of the seat panel when in the closed position. The handle may also be adapted such that when the seat panel is in the open position the handle is in contact with the surface upon which the bench rests. This provides additional support for the seat panel in the open position. In the closed position, the handles may enable a user to carry the bench to another location.

The table panel may be connected to the end panels by any suitable means. In one preferred embodiment, the table panel is provided with locking projections at either end and the end panels are provided with corresponding slots to receive the locking projections.

Cross rails may also be provided to connect the end panels. These add further rigidity to the structure. The cross rails are preferably positioned below and parallel to the axis of rotation of the seat panels. The cross rails may be connected to the end panels by any suitable means. In one preferred embodiment, the cross rails are connected to the end panels by means of snap-fit head according to the first aspect of the present invention inserted into apertures provided in the end panels.

In one embodiment, the upper edges of the cross rails may be positioned so as to provide support to the seat panel when in the open position. To provide further stability in such embodiments, co-operating features may be provided on the cross rail and the end panel in the vicinity of the head and aperture to inhibit rotation of the cross rails.

According to a fifth aspect of the present invention there is provided a play apparatus comprising: a pair of end panels; a top panel; a slide panel; and a ladder wherein the top panel, slide panel and ladder are mounted to and between the pair of end panels characterised in that both the slide panel and ladder are mounted to the end panels by means of a snap-fit head according to the first aspect of the present invention inserted into apertures provided in the end panels, such that the slide panel and ladder may be rotated relative to the end panels.

The play apparatus of the fifth aspect of the present invention may incorporate any or all of the features described in relation to the first to third aspects of the invention as desired or as appropriate.

Preferably, the end panels are adapted to stand substantially vertically. An opening may be provided in each end panel.

Preferably, the slide panel and ladder are adapted to be rotatable about a substantially horizontal axis. Preferably, the horizontal axis is provided at the upper edge of both the slide panel and the ladder. Preferably the lower edges of the slide panel and the ladder are in contact with the surface upon which the apparatus rests. The rotation axis allows the slide panel and the ladder to compensate for an uneven surface.

The slide panel may be adapted to have an upper surface over which a child may slide from the top panel down to the surface upon which the apparatus rests. The ladder may comprise a pair of longitudinal rails and a plurality of steps mounted therebetween.

The top panel may be connected to the end panels by any suitable means. In one preferred embodiment, the top panel is provided with locking projections at either end and the end panels are provided with corresponding slots to receive the locking projections.

Cross rails may also be provided to connect the end panels. These add further rigidity to the structure. The cross rails are preferably positioned below and parallel to the axis of rotation of the ladder and slide panel. The cross rails may be connected to the end panels by any suitable means. In one preferred embodiment, the cross rails are connected to the end panels by means of snap-fit head according to the first aspect of the present invention inserted into apertures provided in the end panels.

According to a sixth aspect of the present invention there is provided a kit of parts for forming: a structure according to the second or third aspects of the present invention; a picnic bench according to the fourth aspect of the present invention; or a play apparatus according to the fifth aspect of the present invention.

The kit of the sixth aspect of the present invention may incorporate any or all of the features described in relation to the first to fifth aspects of the invention as desired or as appropriate.

In order that the invention can be more clearly understood it is now described further below with reference to the accompanying drawings:
- Figure 1a: shows a snap-fit head according to the present invention engaging with an aperture;
- Figure 1b: is a cross-sectional view of the snap-fit head of figure 1a engaging with the aperture;
- Figure 1c: is an end-on view of the snap-fit head of figure 1a engaging with the aperture;
- Figure 2a: is a first view of a picnic bench incorporating a plurality of snap-fit heads according to the first aspect of the present invention;
- Figure 2b: is an alternative view of the picnic bench of figure 2a;
- Figure 3a: shows a play frame incorporating a plurality of snap-fit heads according to the first aspect of the present invention;
- Figure 3b: is an exploded view of the play apparatus of figure 3a; and
- Figure 3c: is an alternative exploded view of the play apparatus of figure 3a.

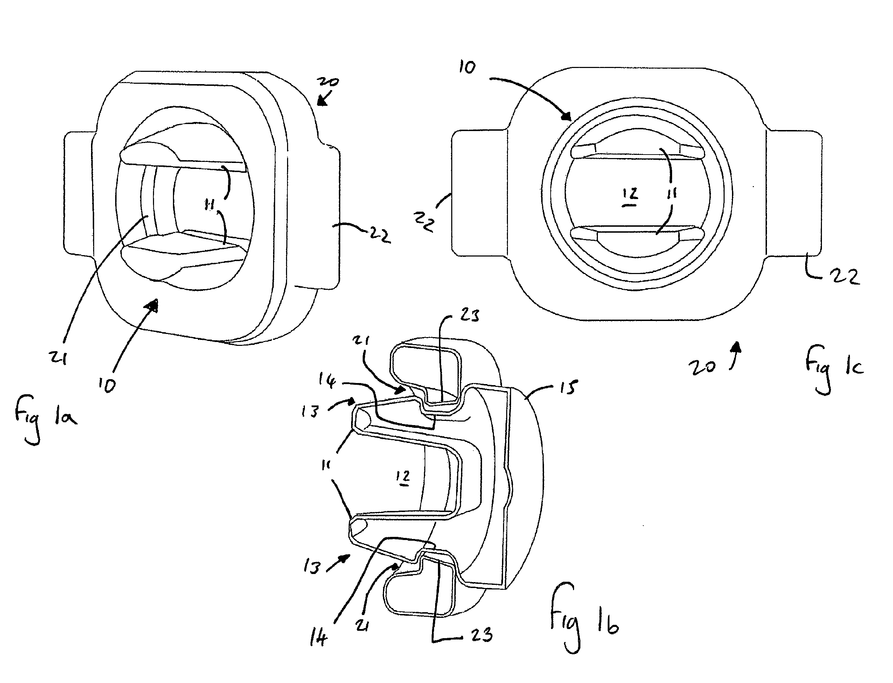

Referring now to figure 1a, a snap fit head 10 is inserted into and engaged by the rim of an aperture 20. This enables the snap-fit head 10 to be retained in position relative to the aperture 20. Furthermore, due to the rotational symmetry of the head 10 and the aperture 20, the head 10 may be rotated with respect to the aperture 20.

The head 10 comprises a pair of jaws 11 with a central void 12 therebetween. The exterior surfaces 13 of the jaws 11 are segments of a truncated cone and are also provided with a circumferential groove 14. The jaws 11 project from a base 15.

The aperture 20 has an inner rim 21, and in this example is further provided with tabs 22 for fastening the aperture to other articles. The inner rim 21 is adapted to engage with the groove 14 and thus has a thickness corresponding to that of the groove. Furthermore, the rim has a sloped internal profile 23.

In use, the snap-fit head 10 is inserted into the aperture 20. This insertion causes the jaws 11 to contact the inner rim 21 and consequently be deformed inwardly into the central void 12. Once the jaws 11 have been inserted sufficiently far through the aperture 20, the inner rim 21 and the circumferential groove 14 are aligned. This allows the jaws 11 to rebound to their usual position. The inner rim 21 then fits within the groove 14 and thus prevents axial movement of the head 10 relative to the aperture 20. If it is subsequently desired to remove the head 10 from the aperture 20, this can be achieved by applying inward pressure to the ends of the jaws 11 causing then to deform inwardly. This will allow the lip 21 to disengage from the groove 14 if the head 10 is pushed back out of the aperture 20.

Typically both the head 10 and the aperture 20 will be formed from moulded plastic. As can be seen from figure 1b, typically, these will be formed from hollow moulded plastic. This reduces the weight of the parts and also advantageously increases the flexibility of the jaws 11, facilitating the insertion and removal of the head 10 from the aperture 20.

The head 10 and aperture 20 shown in figures 1a, 1b and 1c are exemplary embodiments. In more typical circumstances, the head 10 would project from one component of a structure or apparatus and the aperture 20 would be provided in a second component. The head 10 and aperture 20 would then allow the two components to be releasably fastened together whilst still allowing rotation of the first component relative to the second component. Typically in such embodiments both the head 10 and aperture 20 would be integral parts of the respective components. It is however possible that the head and/or the aperture 20 may be standalone parts such as those shown in figure 1 and are attached to the respective components by any suitable means.

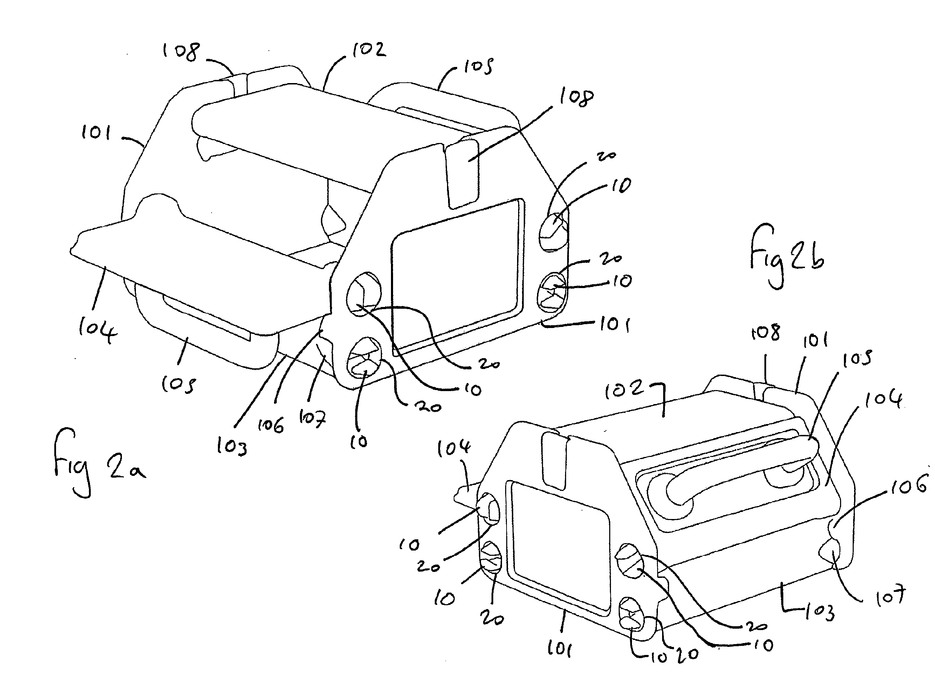

Turning now to figures 2a and 2b, an example of an article incorporating snap-fit heads 10 of the type described above is shown. The article is a picnic bench 100 formed from moulded plastic. The bench 100 as shown is a portable bench intended for use by children but it is feasible that the design could be scaled up for use by adults, although such a version would obviously be less convenient to move due to its increased size.

The bench 100 comprises a pair of end panels 101, between which are mounted a table panel 102 and a pair of cross rails 103. Also provided between the end panels 101 are a pair of rotatable seat panels 104, each seat panel being provided with a handle portion 105.

The table panel 102 is fixed in position between the end panels 101 by means of a locking projection 108 operable to engage with corresponding slots provided on each end panel 101. The cross rails 103 are provided with a snap-fit head 10 at each end. The snap fit heads 10 are able to engage with apertures 20 provided in each end panel 101.

The seat panels 104 are connected to the end panels 101 by way of snap-fit heads 10 inserted into apertures 20 provided in the end panels 101. The heads are aligned with each other such that the seat panel 104 is rotatable about a horizontal axis. This allows the seat panel 104 to be rotated from a first closed position wherein it rests against the table panel 102 (see figure 2b) to a second open position wherein it lies substantially horizontal (see figure 2a). In the horizontal position, a child may sit on the seat panel 104 facing the table panel 102.

The seat panels 104 are also provided with handles 105. When the seat panels 104 are in the closed position, the handles 105 allow a person, such as a parent or childminder, to pick up the bench 100 and move it to a desired location. The handles 105 may also be adapted such that they are in contact with the surface upon which the bench 100 rests when the seat panels 104 are in the open position. This provides additional support when a child is seated on the seat panel 104.

Additionally, the seat panel 104 is adapted to be supported by the upper edge of the cross rail 103 when in the open position. In order that the cross rails 103 are able to provide such support, interacting features 106, 106 are provided on the end panels 101 and cross rails 103 respectively. These interacting features, typically projections or bulges, as shown in figures 2a and 2b, prevent undue rotation of the cross rails 103, when supporting the seat panel 104.

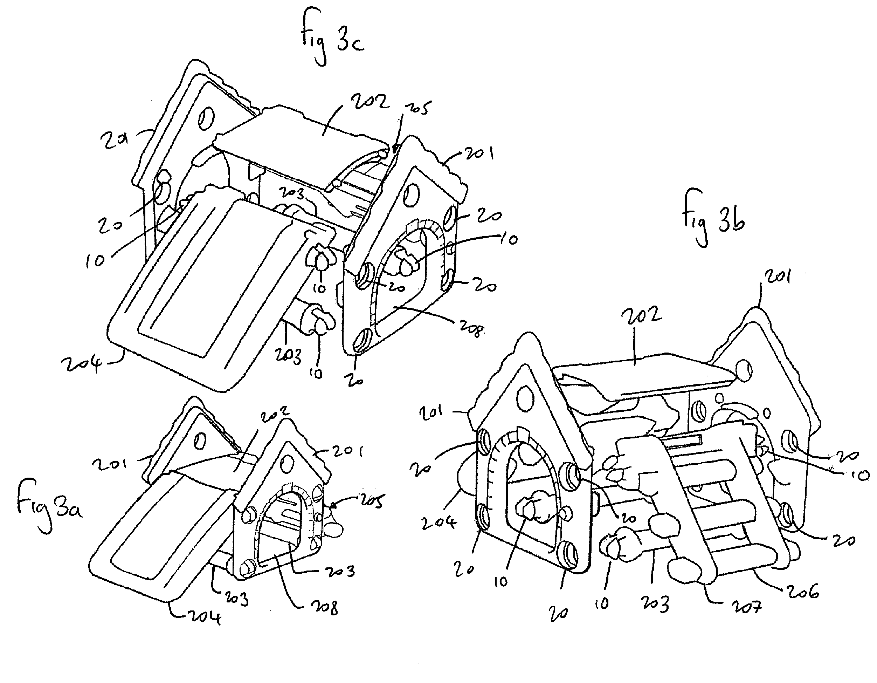

Turning now to figures 3a-c, another possible structure incorporating the snap-fit head of the present invention is shown, in this case, a play apparatus 200. The play apparatus 200 as shown is a portable play apparatus intended for use by children but it is feasible that the design could be scaled up for use by adults, although such a version would obviously be less convenient to move due to its increased size. The play apparatus 200 comprises: a pair of end panels 201; and a top panel 202, a pair of cross rails 203 a slide panel 204 and a ladder 205 all fixed therebetween.

The end panels 201 are provided with openings 208 allowing a child to clamber through the play apparatus 200. The end panels 201 are also provided with co-operating slots adapted to receive locking projections 209 provided on the top panel 202. This enables the top panel 202 to be securely retained between the end panels 201. The end panels 201 are also provided with a plurality of apertures 20 for receiving snap-fit heads 10, by means of which, the cross rails 203, the slide panel 204 and the ladder 205 are connected to the end panels 201.

The cross rails 203 are provided to increase the stability of the play apparatus 200, by preventing the lower edges of end panels 201 from splaying outwards. The slide panel 204 has an upper surface adapted to allow a child to slide down it. As the slide panel 204 is connected between two aligned snap-fit heads 10, it is rotatable about a horizontal axis. In use, the lower edge of the slide panel 204 rests on the surface upon which the play apparatus 200 is provided. The rotation about the horizontal axis allows the slide 204 to compensate for the surface being uneven.

The ladder comprises a pair of longitudinal rails 207 with a plurality of steps 206 mounted therebetween. The steps 206 enable a child to climb up the ladder 205 on to the top panel 202 from where they can descend via the slide 204 or the ladder 205. As the ladder 205 is connected between two aligned snap-fit heads 10, it is rotatable about a horizontal axis. In use, the lower ends of the rails 207 rest on the surface upon which the play apparatus 200 is provided. The rotation about the horizontal axis allows the rails 207 to compensate for the surface being uneven.

In each of these examples, the use of snap-fit heads 10 and corresponding apertures 20 enable the articles to be rapidly and simply assembled from components that may be supplied in a flat pack. Furthermore, the apparatus may be rapidly and simply disassembled, if required. The snap-fit heads also enable some parts to be rotatable relative to each other. This allows the parts to compensate for uneven ground conditions or may add an additional layer of functionality.

Typically, both the examples of figures 2 and 3 will be formed from hollow moulded plastic components. This provides an adequate trade off between structural rigidity and weight, particularly where use by a child is concerned. It is however possible that other material may be used instead, if desired.

It is of course to be understood that the invention is not to be restricted to the details of the above embodiments which have been described by way of example only.

## Claims

1. A rotatable snap-fit head adapted to snap-fit with a substantially circular aperture, said head having a generally conical or frusto-conical exterior profile incorporating a circumferential groove for engaging with the rim of the aperture, said head comprising two or more inwardly flexible jaws with a void therebetween, allowing the head to be inserted through the aperture sufficiently far that the aperture may then engage with the circumferential groove and wherein the head is hollow.

2. A rotatable snap-fit head as claimed in claim 1 wherein the head comprises two jaws.

3. A rotatable snap-fit head as claimed in any preceding claim wherein the exterior surface of the jaws provides the generally conical or frusto-conical exterior profile of the head.

4. A rotatable snap-fit head as claimed in any preceding claim wherein the head is formed integrally as part of a component of a structure or complex article.

5. A rotatable snap-fit head as claimed in any one of claims 1 to 3 wherein the head is fixed to a component by any suitable means.

6. A rotatable snap-fit head as claimed in any preceding claim wherein an aperture is provided in a component for connecting with said head.

7. A rotatable snap-fit head as claimed in any one of claims 1 to 5 wherein the aperture is provided in a separate component that may be affixed to another component by any suitable means.

8. A rotatable snap-fit head as claimed in any preceding claim wherein the aperture comprises an inner rim adapted to provide the engagement with the circumferential groove.

9. A rotatable snap-fit head as claimed in claim 8 wherein the inner rim is provided with a sloped inner profile to facilitate insertion of the head into the aperture.

10. A rotatable snap-fit head as claimed in any preceding claim wherein the head and/or the aperture are hollow.

11. A rotatable snap-fit head as claimed in any preceding claim wherein the head and/or the aperture are formed from moulded plastic by a suitable blow moulding or rotational moulding technique.

12. A structure comprising a first component provided with a head according to any one of claims 1 to 11; and a second component provided with an aperture for engaging with a head according to any one of claims 1 to 11 wherein the first and second components are connected together by inserting the head into the aperture.

13. A structure as claimed in claim 12 wherein the snap fit head is used to connect components where relative rotation is not desirable and wherein the first and second components are provided with additional co-operating features operable to inhibit such rotation.

14. A structure comprising a first component provided with a pair of heads according to any one of claims 1 to 11, said pair of heads being aligned along a common axis; and a pair of apertures for engaging with a head according to any one of claims 1 to 11 provided upon one or more mounting components wherein the first component is connected between the apertures of the mounting component or components by inserting each head into one of the apertures such that the first component may rotate about the common axis of the heads relative to the mounting components.

15. A structure as claimed in claim 14 wherein the structure comprises a substantially panel like first component and one or more mounting components forming a frame, such that the panel like component is rotatable relative to the frame.

16. A structure as claimed in any one of claims 12 to 15 wherein the structure comprises a sign, door, window, shelf or similar or wherein the structure comprises an item of furniture such as a chair, table or similar or a child's play apparatus such as a climbing frame or slide.

17. A picnic bench comprising: a pair of end panels; a table panel; and a pair of seat panels wherein the table panel and seat panels are mounted to and between the pair of end panels **characterised in that** the seat panels are mounted to the end panels by means of a snap-fit head according to any one of claims 1 to 11 inserted into apertures provided in the end panels, such that the seat panels may be rotated relative to the end panels.

18. A picnic bench as claimed in claim 17 wherein the end panels are adapted to stand substantially vertically and the seat panels are adapted to be rotatable about a substantially horizontal axis.

19. A picnic bench as claimed in claim 18 wherein the seat panels are rotatable from a first closed position wherein they rest on the table panel to a second open position where they project substantially horizontally from the bench.

20. A picnic bench as claimed in claim 19 wherein the seat panels are each provided with a projecting handle, the handle being positioned to project downwardly of the seat panel when in the open position and upwardly of the seat panel when in the closed position.

21. A picnic bench as claimed in claim 20 wherein the handle is adapted such that when the seat panel is in the open position the handle is in contact with the surface upon which the bench rests and when in the closed position, the handles enable a user to carry the bench to another location.

22. A picnic bench as claimed in any one of claims 17 to 21 wherein the table panel is provided with locking projections at either end and the end panels are provided with corresponding slots to receive the locking projections.

23. A picnic bench as claimed in any one of claims 17 to 22 wherein cross rails are provided to connect the end panels, the cross rails being positioned below and parallel to the axis of rotation of the seat panels.

24. A picnic bench as claimed in claim 23 wherein the cross rails are connected to the end panels by means of snap-fit head according to any one of claims 1 to 11 inserted into apertures provided in the end panels.

25. A picnic bench as claimed in claim 23 or claim 24 wherein the upper edges of the cross rails are positioned so as to provide support to the seat panel when in the open position.

26. A picnic bench as claimed in any one of claims 23 to 25 wherein co-operating features are provided on the cross rail and the end panel in the vicinity of the head and aperture to inhibit rotation of the cross rails.

27. A play apparatus comprising: a pair of end panels; a top panel; a slide panel; and a ladder wherein the top panel, slide panel and ladder are mounted to and between the pair of end panels **characterised in that** both the slide panel and ladder are mounted to the end panels by means of a snap-fit head according to any one of claims 1 to 11 inserted into apertures provided in the end panels, such that the slide panel and ladder may be rotated relative to the end panels.

28. A play apparatus as claimed in claim 27 wherein the end panels are adapted to stand substantially vertically and an opening is provided in each end panel.

29. A play apparatus as claimed in claim 27 or claim 28 wherein the slide panel and ladder are adapted to be rotatable about a substantially horizontal axis provided at the upper edge of both the slide panel and the ladder.

30. A play apparatus as claimed in claim 29 wherein the lower edges of the slide panel and the ladder are in contact with the surface upon which the apparatus rests.

31. A play apparatus as claimed in any one of claims 27 to 30 wherein the slide panel is adapted to have an upper surface over which a child may slide from the top panel down to the surface upon which the apparatus rests.

32. A play apparatus as claimed in any one of claims 27 to 31 wherein the top panel is provided with locking projections at either end and the end panels are provided with corresponding slots to receive the locking projections.

33. A play apparatus as claimed in any one of claims 27 to 32 wherein cross rails are provided to connect the end panels, the cross rails being positioned below and parallel to the axis of rotation of the ladder and slide panel.

34. A play apparatus as claimed in claim 33 wherein the cross rails are connected to the end panels by means of snap-fit head according to any one of claims 1 to 11 inserted into apertures provided in the end panels.

35. A kit of parts for forming: a structure according to any one of claims 12 to 16; a picnic bench according to any one of claims 17 to 26; or a play apparatus according to any one of claims 27 to 34.
